(19) Europäisches Patentamt
European Patent Office
Office européen des brevets

(11) EP 1 598 841 A1

(12) **EUROPÄISCHE PATENTANMELDUNG**

(43) Veröffentlichungstag:
**23.11.2005 Patentblatt 2005/47**

(51) Int Cl.$^{7}$: **H01G 9/028**

(21) Anmeldenummer: **05009304.6**

(22) Anmeldetag: **28.04.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **05.05.2004 DE 102004022110**

(71) Anmelder: **H.C. Starck GmbH & Co. KG**
**38642 Goslar (DE)**

(72) Erfinder: **Merker, Udo Dr.**
**50679 Köln (DE)**

(74) Vertreter: **Bramer-Weger, Elmar et al**
**Bayer MaterialScience AG**
**Law & Patents**
**Patent and Licensing**
**51368 Leverkusen (DE)**

(54) **Verfahren zur Herstellung von Elektrolytkondensatoren**

(57) Die Erfmdung betrifft ein Verfahren zur Herstellung von Elektrolytkondensatoren mit niedrigem äquivalenten Serienwiderstand und niedrigem Reststrom bestehend aus einem Feststoffelektrolyten aus leitfähigen Polymeren und einer äußeren Schicht enthaltend leitfähige Polymere und einen Binder, sowie die mit dem Verfahren hergestellten Elektrolytkondensatoren und deren Verwendung.

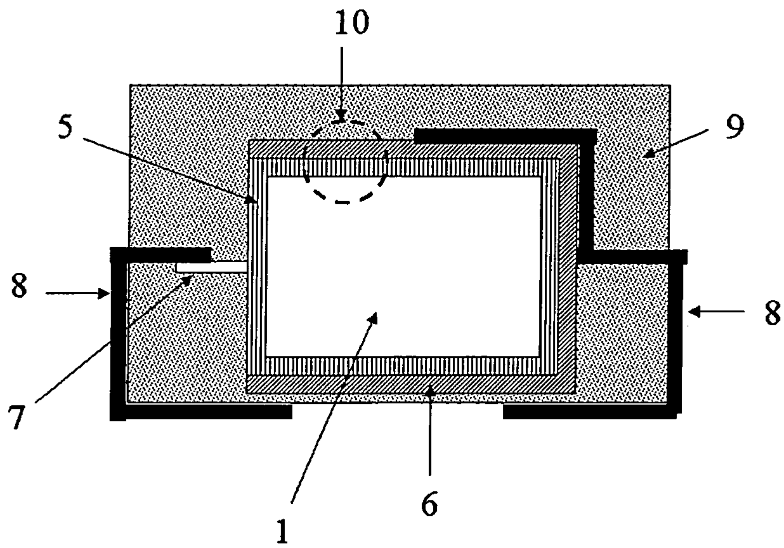


Fig. 1

EP 1 598 841 A1

## Beschreibung

Die Erfindung betrifft ein Verfahren zur Herstellung von Elektrolytkondensatoren mit niedrigem äquivalenten Serienwiderstand und niedrigem Reststrom umfassend einen Feststoffelektrolyten aus leitfähigen Polymeren und eine äußere Schicht enthaltend leitfähige Polymere und einen Binder, sowie die mit dem Verfahren hergestellten Elektrolytkondensatoren und deren Verwendung.

Ein Feststoffelektrolytkondensator besteht in der Regel aus einer porösen Metallelektrode, einer auf der Metalloberfläche befindlichen Oxidschicht, einem elektrisch leitfähigen Feststoff, der in die poröse Struktur eingebracht wird, einer äußeren Elektrode, wie z.B. einer Silberschicht, sowie weiteren elektrischen Kontakten und einer Verkapselung.

Beispiele für Feststoffelektrolytkondensatoren sind Tantal-, Aluminium, Niob- und Nioboxidkondensatoren mit Ladungstransferkomplexen, Braunstein- oder Polymer-Feststoffelektrolyten. Die Verwendung poröser Körper hat den Vorteil, dass sich aufgrund der großen Oberfläche sehr hohe Kapazitätsdichten, d.h. hohe elektrische Kapazitäten auf kleinem Raum, erzielen lassen.

Besonders geeignet als Feststoffelektrolyte sind aufgrund ihrer hohen elektrischen Leitfähigkeit π-konjugierte Polymere. π-konjugierte Polymere werden auch als leitfähige Polymere oder als synthetische Metalle bezeichnet. Sie gewinnen zunehmend an wirtschaftlicher Bedeutung, da Polymere gegenüber Metallen Vorteile bezüglich der Verarbeitbarkeit, des Gewichts und der gezielten Einstellung von Eigenschaften durch chemische Modifikation haben. Beispiele für bekannte π-konjugierte Polymere sind Polypyrrole, Polythiophene, Polyaniline, Polyacetylene, Polyphenylene und Poly(p-phenylen-vinylene), wobei ein besonders wichtiges und technisch genutztes Polythiophen das Poly-3,4-(ethylen-1,2-dioxy)thiophen, oft auch als Poly(3,4-ethylendioxythiophen) bezeichnet, ist, da es in seiner oxidierten Form eine sehr hohe Leitfähigkeit aufweist.

Die technische Entwicklung in der Elektronik erfordert zunehmend Feststoffelektrolytkondensatoren mit sehr niedrigem Äquivalenten Serienwiderstand (ESR). Grund dafür sind beispielsweise fallende Logikspannungen, eine höhere Integrationsdichte und steigende Taktfrequenzen in integrierten Schaltkreisen. Ferner senkt ein niedriger ESR auch den Energieverbrauch, was besonders für mobile, batteriebetriebene Anwendungen vorteilhaft ist. Es besteht daher der Wunsch, den ESR von Feststoffelektrolytkondensatoren möglichst weit zu reduzieren.

In der europäischen Patentanmeldung EP-A 340 512 wird die Herstellung eines Feststoffelektrolyten aus 3,4-Ethylen-1,2-dioxythiophen und die Verwendung seines durch oxidative Polymerisation in-situ hergestellten, kationischen Polymeren als Feststoffelektrolyt in Elektrolytkondensatoren beschrieben. Poly(3,4-ethylendioxythiophen) als Ersatz von Mangandioxid oder von Ladungstransferkomplexen in Feststoffelektrolytkondensatoren senkt aufgrund der höheren elektrischen Leitfähigkeit den äquivalenten Serienwiderstand des Kondensators und verbessert das Frequenzverhalten.

In der japanischen Patentschrift JP-B 3296727 wird ein spezielles Verfahren zur Herstellung von Feststoffelektrolytkondensatoren beschrieben. Dazu wird eine Kondensatoranode in eine Lösung aus Oxidationsmittel und 3,4-Ethylen-1,2-dioxythiophen getränkt und die Mischung anschließend bei einer Luftfeuchte von größer 70% und einer Temperatur zwischen 30°C und 50°C polymerisiert. Nachteilig an diesem Verfahren ist, dass die mit diesem Verfahren auf der äußeren Anodenoberfläche erzeugten Filme, keine hinreichende Stabilität gegenüber externen Belastungen aufweisen. Die mit diesem Verfahren hergestellten Kondensatoren weisen daher einen hohen Reststrom und hohe ESR Werte auf.

Neben einem niedrigen ESR erfordern moderne Feststoffelektrolytkondensatoren einen niedrigen Reststrom und eine gute Stabilität gegenüber externen Belastungen. Insbesondere während des Herstellungsprozesses treten bei der Verkapselung der Kondensatoranoden hohe mechanische Belastungen auf, die den Reststrom der Kondensatoranode stark erhöhen können.

Stabilität gegenüber solchen Belastungen und damit ein geringer Reststrom lassen sich vor allem durch eine ca. 5-50 μm dicke Außenschicht aus leitfähigen Polymeren auf der Kondensatoranode erzielen. Eine solche Schicht dient als mechanischer Puffer zwischen der Kondensatoranode und der kathodenseitigen Elektrode. Dadurch wird verhindert, dass die Elektrode z.B. bei mechanischer Belastung mit der Anode in direkten Kontakt kommt oder diese beschädigt und sich dadurch der Reststrom des Kondensators erhöht. Die leitfähige polymere Außenschicht selbst weist ein sogenanntes Selbstheilungsverhalten auf: Kleinere Defekte im Dielektrikum an der äußeren Anodenoberfläche, die trotz der Pufferwirkung auftreten, werden dadurch elektrisch isoliert, dass die Leitfähigkeit der Außenschicht an der Defektstelle durch den elektrischen Strom zerstört wird.

Die Bildung einer solchen Außenschicht mittels in-situ Polymerisation ist sehr schwierig. Die Schichtbildung bedarf dabei sehr vieler Beschichtungszyklen. Durch die große Anzahl an Beschichtungszyklen ist die Außenschicht sehr inhomogen, insbesondere die Kanten der Kondensatoranode werden oftmals unzureichend belegt.

Werden Oxidationsmittel und Monomere gemeinsam in Form von Mischungen auf die Kondensatoranode aufgebracht, um eine polymere Außenschicht zu erzeugen, so platzt die polymere Außenschicht von der Kondensatoranode aufgrund mangelnder Haftung ab, noch bevor sich eine hinreichend dicke und homogene Außenschicht bilden

konnte. Dies führt zu hohen ESR Werten und hohen Restströmen.

Die japanische Patentanmeldung JP-A 2003-188052 beschreibt, dass homogene Kantenbelegung durch ein sequentielles Aufbringen von Oxidationsmittel und Monomeren sowie eine aufwendige Abstimmung der Prozessparameter möglich ist. Dies macht den Herstellungsprozess jedoch sehr aufwendig und anfällig gegenüber Störungen.

Eine dichte Außenschicht mit guter Kantenbelegung kann durch elektrochemische Polymerisation erreicht werden. Die elektrochemische Polymerisation erfordert jedoch, dass zunächst ein leitfähiger Film auf der isolierenden Oxidschicht der Kondensatoranode abgeschieden wird und diese Schicht dann für jeden einzelnen Kondensator elektrisch kontaktiert wird. Diese Kontaktierung ist in der Massenfertigung sehr aufwendig und kann die Oxidschicht beschädigen.

Ein Kondensator mit einer dichten Außenschicht lässt sich auch dadurch herstellen, dass die Kondensatoranode zunächst, wie beispielsweise in den oben aufgeführten Patentschriften EP-A 340 512 oder JP-B 3296727 beschrieben, mittels in-situ Polymerisation beschichtet wird und anschließend durch das Aufbringen einer Formulierung von leitfähigen Polymeren mit Bindermaterialien eine Außenschicht erzeugt wird. Da jedoch bereits bei der in-situ Polymerisation leitfähiges Polymer auf der äußeren Anodenoberfläche abgeschieden wird, befindet sich die aus der Formulierung hergestellte Außenschicht nicht im direkten Kontakt mit der Anodenoberfläche, sondern haftet auf der in-situ Schicht. Die schlechte Haftung der in-situ Schicht auf der Anodenoberfläche führt dann wiederum zu lokalen Ablösungen des Außenfilms und dadurch zu einem höheren ESR. Das alleinige Aufbringen einer gut haftenden Formulierung von leitfähigen Polymeren mit Bindermaterialien ohne vorhergehende in-situ Beschichtung ist nicht ausreichend, da die Leitfähigkeit der Formulierung zu gering ist, um einen niedrigen ESR zu erzielen bzw. die Formulierung überhaupt nicht in die Porenstruktur eindringt.

Es besteht somit Bedarf an einem einfachen Verfahren zur Herstellung von Feststoffelektrolytkondensatoren, die sich durch einen niedrigen Äquivalenten Serienwiderstand (ESR), einen niedrigen Reststrom und eine dichte polymere Außenschicht mit guter Kantenbelegung auszeichnen.

Die Aufgabe bestand daher darin, geeignete Verfahren aufzufmden, mit denen sich solche Feststoffelektrolytkondensatoren herstellen lassen.

Überraschend wurde nun gefunden, dass ein Verfahren, bei dem die Kondensatorelektroden nach Tränkung in Mischungen enthaltend Vorstufen zur Herstellung von leitfähigen Polymeren und Oxidationsmittel einer relativen Luftfeuchte größer oder gleich 70% ausgesetzt werden und bei dem eine leitfähige Außenschicht auf den Kondensatorelektroden aus einer Lösung oder Dispersion enthaltend ein leitfähiges Polymer und einen Binder aufgebracht wird, diese Anforderungen erfüllt.

Gegenstand der Erfindung ist ein Verfahren zur Herstellung eines Elektrolytkondensators wenigstens enthaltend folgende Prozessschritte A) bis C), wobei

A) eine Mischung enthaltend Vorstufen zur Herstellung leitfähiger Polymere, ein oder mehrere Oxidationsmittel und gegebenenfalls Gegenionen in einen mit einem Dielektrikum und gegebenenfalls weiteren Schichten überzogenen porösen Elektrodenkörper eines Elektrodenmaterials eingebracht wird,

B) zur Bildung eines Feststoffelektrolyten der mit der Mischung enthaltend Vorstufen zur Herstellung leitfähiger Polymere, ein oder mehrere Oxidationsmittel und gegebenenfalls Gegenionen getränkte Elektrodenkörper einer relativen Luftfeuchte größer oder gleich 70% ausgesetzt wird, und die Vorstufen polymerisiert werden, und

C) zur Bildung einer leitfähigen Außenschicht auf den mit einem Dielektrikum sowie ganz oder teilweise mit einem Feststoffelektrolyten und gegebenenfalls weiteren Schichten bedeckten porösen Elektrodenkörper eine Lösung oder Dispersion enthaltend mindestens ein leitfähiges Polymer und mindestens einen Binder aufgebracht wird und getrocknet wird.

Die Mischung enthaltend Vorstufen zur Herstellung leitfähiger Polymere, ein oder mehrere Oxidationsmittel und gegebenenfalls Gegenionen wird im Folgenden auch kurz als Mischung bezeichnet.

Unter Einbringen der Mischung in einen mit einem Dielektrikum und gegebenenfalls weiteren Schichten überzogenen porösen Elektrodenkörper ist im Rahmen der Erfindung zu verstehen, dass die Mischung nach Aufbringen auf den mit einem Dielektrikum und gegebenenfalls weiteren Schichten überzogenen porösen Elektrodenkörper in die poröse Struktur des Elektrodenkörpers eindringt.

Prinzipiell wird ein Elektrolytkondensator folgendermaßen hergestellt: Zunächst wird z.B. ein Pulver mit einer hohen Oberfläche gepresst und zu einem porösen Elektrodenkörper gesintert. Es können auch Metallfolien geätzt werden, um eine poröse Folie zu erhalten. Der Elektrodenkörper wird dann beispielsweise durch elektrochemische Oxidation, mit einem Dielektrikum, d. h. einer Oxidschicht, überzogen. Auf dem Dielektrikum wird mittels oxidativer Polymerisation ein leitfähiges Polymer abgeschieden, welches den Feststoffelektrolyten bildet. Auf die äußere Oberfläche des Kondensatorkörpers wird daraufhin eine Schicht enthaltend wenigstens ein leitfähiges Polymer sowie einem

Binder aus einer Lösung oder Dispersion aufgebracht.

Gegebenenfalls werden weitere Schichten auf diese polymere Außenschicht aufgebracht. Ein Überzug mit gut leitfähigen Schichten, wie Graphit und Silber, oder ein metallischer Kathodenkörper dient als Elektrode zur Ableitung des Stroms. Schließlich wird der Kondensator kontaktiert und eingekapselt.

Das Elektrodenmaterial bildet im Elektrolytkondensator aus dem erfmdungsgemäßen Verfahren bevorzugt einen porösen Körper mit großer Oberfläche, z.B. in Form eines porösen Sinterkörpers oder einer aufgerauten Folie. Im Folgenden wird dieser auch kurz als Elektrodenkörper bezeichnet.

Der mit einem Dielektrikum bedeckte Elektrodenkörper wird im Folgenden auch kurz als oxidierter Elektrodenkörper bezeichnet. Die Bezeichnung "oxidierter Elektrodenkörper" umfasst auch solche Elektrodenkörper, die mit einem Dielektrikum bedeckt sind, das nicht durch Oxidation des Elektrodenkörpers hergestellt wurde.

Der mit einem Dielektrikum sowie ganz oder teilweise mit einem Feststoffelektrolyten bedeckte Elektrodenkörper wird im Folgenden auch kurz als Kondensatorkörper bezeichnet.

Die Schicht, die aus einer Lösung oder Dispersion enthaltend wenigstens ein leitfähiges Polymer und einen Binder auf die äußere Oberfläche des Kondensatorkörpers aufgebracht wird, wird im Folgenden als polymere Außenschicht bezeichnet.

Unter äußerer Oberfläche werden die Außenseiten des Kondensatorkörpers verstanden. Auf der gesamten oder einem Teil dieser Außenflächen befindet sich, wie schematisch und beispielhaft in Fig. 1 und Fig. 2 dargestellt, die polymere Außenschicht.

Fig. 1 beschreibt eine schematische Darstellung des Aufbaus eines Feststoffelektrolytkondensators am Beispiel eines Tantalkondensators mit

1 Kondensatorkörper

5 polymere Außenschicht

6 Graphit/Silberschicht

7 Drahtkontakt zum Elektrodenkörper

8 Kontakte

9 Verkapselung

10 Bildausschnitt

Fig. 2 beschreibt den vergrößerten Bildausschnitt 10 aus Fig. 1 der den schematischer Schichtaufbau des Tantalkondensators mit

10 Bildausschnitt

2 poröser Elektrodenkörper

3 Dielektrikum

4 Feststoffelektrolyt

5 polymere Außenschicht

6 Graphit/Silberschicht

Im Rahmen der Erfindung können die im Folgenden aufgeführten, allgemeinen oder in Vorzugsbereichen genannten Definitionen, Restedefinitionen, Parameter und Erläuterungen untereinander, also auch zwischen den jeweiligen Bereichen und Vorzugsbereichen in beliebiger Weise kombiniert werden.

Der Begriff Polymere umfasst im Sinne der Erfindung alle Verbindungen mit mehr als einer Wiederholungseinheit.

Unter leitfähigen Polymeren wird hier die Verbindungsklasse der $\pi$-konjugierten Polymere verstanden, die nach Oxidation oder Reduktion eine elektrische Leitfähigkeit besitzen. Bevorzugt werden im Sinne der Erfindung solche $\pi$-konjugierten Polymere unter leitfähigen Polymeren verstanden, die nach Oxidation elektrische Leitfähigkeit besitzen.

Als Beispiel seinen hier gegebenenfalls substituierte Polythiophene, Polypyrrole und Polyaniline genannt, die sowohl substituiert als auch nicht substituiert sein können. Bevorzugte leitfähige Polymere im Sinne der Erfindung sind gegebenenfalls substituierte Polythiophene, insbesondere gegebenenfalls substituierte Poly(3,4-ethylendioxythiophene).

Unter substituiert wird im Folgenden, wenn nicht anders erwähnt, eine Substituierung mit einem Rest ausgewählt aus der Gruppe:

Alkyl-, Cycloalkyl-, Aryl-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen verstanden.

Als Vorstufen für die Herstellung leitfähiger Polymere, im Folgenden auch als Vorstufen bezeichnet, werden entsprechende Monomere oder deren Derivate verstanden. Es können auch Mischungen von unterschiedlichen Vorstufen verwendet werden. Geeignete monomere Vorstufen sind beispielsweise gegebenenfalls substituierte Thiophene, Pyrrole oder Aniline, bevorzugt gegebenenfalls substituierte Thiophene, besonders bevorzugt gegebenenfalls substituierte 3,4-Alkylendioxythiophene.

Als substituierte 3,4-Alkylendioxythiophene seien beispielhaft die Verbindungen der allgemeinen Formeln (I), (II) oder einer Mischung aus Thiophenen der allgemeinen Formeln (I) und (II),

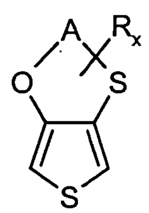

(I)

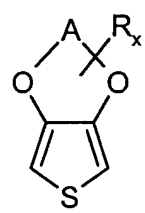

(II)

aufgeführt,

worin

A für einen gegebenenfalls substituierten $C_1$-$C_5$-Alkylenrest, bevorzugt für einen gegebenenfalls substituierten $C_2$-$C_3$-Alkylenrest, steht,

R für einen linearen oder verzweigten, gegebenenfalls substituierten $C_1$-$C_{18}$Alkylrest, bevorzugt linearen oder verzweigten, gegebenenfalls substituierten $C_1$-$C_{14}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest, bevorzugt gegebenenfalls substituierten $C_1$-$C_2$-Hydroxyalkylrest, oder einen Hydroxylrest steht,

x für eine ganze Zahl von 0 bis 8 steht, bevorzugt von 0 bis 6, besonders bevorzugt für 0 oder 1 steht und

für den Fall, dass mehrere Reste R an A gebunden sind, diese gleich oder unterschiedlich sein können.

Besonders bevorzugt sind Polythiophene mit wiederkehrenden Einheiten der allgemeinen Formel (I), (II) oder wiederkehrenden Einheiten der allgemeinen Formel (I) und (II), worin A für einen gegebenenfalls substituierten $C_2$-$C_3$-Alkylenrest und x für 0 oder 1 steht.

Ganz besonders bevorzugte monomere Vorstufen sind gegebenenfalls substituierte 3,4-Ethylendioxythiophene.

Als substituierte 3,4-Ethylendioxythiophene seien beispielhaft die Verbindungen der allgemeinen Formel (III) genannt,

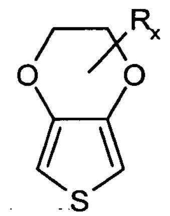

(III)

worin R und x die für die allgemeine Formeln (I) und (II) genannte Bedeutung haben.

Unter Derivaten dieser monomeren Vorstufen werden im Sinne der Erfindung beispielsweise Dimere oder Trimere dieser monomeren Vorstufen verstanden. Es sind auch höhermolekulare Derivate, d.h. Tetramere, Pentamere etc. der monomeren Vorstufen als Derivate möglich.

Als Derivate substituierter 3,4-Alkylendioxythiophene seien beispielhaft die Verbindungen der allgemeinen Formel (IV) genannt,

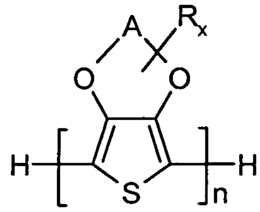

(IV)

worin

n für eine ganze Zahl von 2 bis 20, bevorzugt 2 bis 6, besonders bevorzugt für 2 oder 3 steht,

und

A, R und x die für die allgemeine Formeln (I) und (II) genannte Bedeutung haben.

Die Derivate können sowohl aus gleichen wie unterschiedlichen Monomereinheiten aufgebaut sein und in reiner Form sowie im Gemisch untereinander und/oder mit den monomeren Vorstufen eingesetzt werden. Auch oxidierte oder reduzierte Formen dieser Vorstufen sind im Sinne der Erfindung von dem Begriff "Vorstufen" umfasst, sofern bei ihrer Polymerisation die gleichen leitfähigen Polymeren entstehen wie bei den vorangehend aufgeführten Vorstufen.

Als Substituenten für die Vorstufen, insbesondere für die Thiophene, bevorzugt für die 3,4-Alkylendioxythiophene kommen die für die allgemeine Formeln (I) und (II) für R genannten Reste in Frage.

$C_1$-$C_5$-Alkylenreste A sind im Rahmen der Erfindung Methylen, Ethylen, n-Propylen, n-Butylen oder n-Pentylen. $C_1$-$C_{18}$-Alkyl steht im Rahmen der Erfindung für lineare oder verzweigte $C_1$-$C_{18}$-Alkylreste wie beispielsweise Methyl, Ethyl, n- oder iso-Propyl, n-, iso-, sec- oder tert-Butyl, n-Pentyl, 1-Methylbutyl, 2-Methylbutyl, 3-Methylbutyl, 1-Ethylpropyl, 1,1-Dimethylpropyl, 1,2-Dimethylpropyl, 2,2-Dimethylpropyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl, $C_5$-$C_{12}$-Cycloalkyl für $C_5$-$C_{12}$-Cycloalkylreste wie beispielsweise Cyclopentyl, Cyclohexyl, Cycloheptyl, Cyclooctyl, Cyclononyl oder Cyclodecyl, $C_5$-$C_{14}$-Aryl für $C_5$-$C_{14}$-Arylreste wie beispielsweise Phenyl oder Naphthyl, und $C_7$-$C_{18}$-Aralkyl für $C_7$-$C_{18}$-Aralkylreste wie beispielsweise Benzyl, o-, m-, p-Tolyl, 2,3-, 2,4-, 2,5-, 2,6-, 3,4-, 3,5-Xylyl oder Mesityl. Die vorangehende Aufzählung dient der beispielhaften Erläuterung der Erfindung und ist nicht als abschließend zu betrachten.

Als gegebenenfalls weitere Substituenten der $C_1$-$C_5$-Alkylenreste A kommen zahlreiche organische Gruppen in Frage, beispielsweise Alkyl-, Cycloalkyl-, Aryl-, Halogen-, Ether-, Thioether-, Disulfid-, Sulfoxid-, Sulfon-, Sulfonat-, Amino-, Aldehyd-, Keto-, Carbonsäureester-, Carbonsäure-, Carbonat-, Carboxylat-, Cyano-, Alkylsilan- und Alkoxysilangruppen sowie Carboxylamidgruppen.

Verfahren zur Herstellung der monomeren Vorstufen für die Herstellung leitfähiger Polymere sowie deren Derivaten sind dem Fachmann bekannt und beispielsweise in L. Groenendaal, F. Jonas, D. Freitag, H. Pielartzik & J. R. Reynolds, Adv. Mater. 12 (2000) 481 - 494 und darin zitierter Literatur beschrieben.

Die für die Herstellung der zu verwendenden Polythiophene erforderlichen 3,4-Alkylenoxythiathiophene der Formel (I) sind dem Fachmann bekannt oder nach bekannten Verfahren herstellbar (beispielsweise gemäß P. Blanchard, A. Cappon, E. Levillain, Y. Nicolas, P. Frère und J. Roncali, Org. Lett. **4** (4), 2002, S. 607 - 609).

Die leitfähigen Polymere werden auf dem mit einem Dielektrikum bedeckten Elektrodenkörper durch oxidative Polymerisation von Vorstufen zur Herstellung leitfähiger Polymere erzeugt, indem man auf dem Dielektrikum des Elektrodenkörpers eine Mischung enthaltend die Vorstufen, Oxidationsmittel, gegebenenfalls Gegenionen und vorzugsweise Lösungsmittel aufbringt, die getränkten oxidierten Elektrodenkörper erfindungsgemäß einer relativen Luftfeuchte von größer oder gleich 70% aussetzt und die oxidative Polymerisation, je nach Aktivität des verwendeten Oxidationsmittels, gegebenenfalls durch ein Erwärmen der Beschichtung zu Ende führt.

Als Oxidationsmittel können alle dem Fachmann bekannten für die oxidative Polymerisation von Thiophenen, Anilinen oder Pyrrolen geeignete Metallsalze verwendet werden.

Als Oxidationsmittel geeignete Metallsalze sind Metallsalze von Haupt- oder Nebengruppenmetallen, letztere im Folgenden auch als Übergangsmetallsalze bezeichnet, des Periodensystems der Elemente. Geeignete Übergangsmetallsalze sind insbesondere Salze einer anorganischen oder organischen Säure oder organische Reste aufweisenden anorganischen Säure von Übergangsmetallen, wie z.B. von Eisen(III), Kupfer(II), Chrom(VI), Cer(IV), Mangan(IV), Mangan(VII) und Ruthenium(III).

Bevorzugte Übergangsmetallsalze sind solche des Eisen(III). Übliche Eisen(III)-Salze sind vorteilhafterweise preiswert, leicht erhältlich und können leicht gehandhabt werden, wie z.B. die Eisen(III)-Salze anorganischer Säuren, wie beispielsweise Eisen(III)halogenide (z.B. $FeCl_3$) oder Eisen(III)-Salze anderer anorganischer Säuren, wie $Fe(ClO_4)_3$ oder $Fe_2(SO_4)_3$, und die Eisen(III)-Salze organischer Säuren und organische Reste aufweisender anorganischer Säuren.

Als Eisen(III)-Salze organische Reste aufweisender anorganischer Säuren seien beispielsweise die Eisen (III)-Salze der Schwefelsäuremonoester von $C_1$-$C_{20}$-Alkanolen, z.B. das Eisen(III)-Salz des Laurylsulfates genannt.

Besonders bevorzugte Übergangsmetallsalze sind solche einer organischen Säure, insbesondere Eisen(III) -Salze organischer Säuren.

Als Eisen(III)-Salze organischer Säuren seien beispielsweise genannt: die Eisen(III)-Salze von $C_1$-$C_{20}$-Alkansulfonsäuren, wie der Methan-, Ethan-, Propan-, Butan- oder höherer Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsulfonsäure und von Cycloalkansulfonsäuren wie Camphersulfonsäure.

Es können auch beliebige Gemische dieser vorgenannten Eisen(III)-Salze organischer Säuren als Oxidationsmittel eingesetzt werden.

Die Verwendung der Eisen(III)-salze organischer Säuren und der organischen Reste aufweisenden anorganischen Säuren hat den großen Vorteil, dass sie nicht korrosiv wirken.

Ganz besonders bevorzugte Metallsalze sind Eisen(III)-p-toluolsulfonat, Eisen(III)-o-toluolsulfonat oder einer Mischung aus Eisen(III)-p-toluolsulfonat und Eisen(III)-o-toluolsulfonat.

In bevorzugten Ausführungsformen werden die Metallsalze vor ihrem Einsatz mit einem Ionenaustauscher, vorzugsweise einem basischen Anionenaustauscher, behandelt. Beispiele für geeignete Ionenaustauscher sind mit tertiären Aminen funktionalisierte makroporöse Polymerisate aus Styrol und Divinylbenzol wie sie z.B. unter dem Handelnamen Lewatit® von der Bayer AG, Leverkusen vertrieben werden. Die Herstellung solcher mit einem Ionenaustauscher behandelten Metallsalze ist in DE 103 24 534 beschrieben.

Weiterhin geeignete Oxidationsmittel sind Peroxoverbindungen wie Peroxodisulfate (Persulfate), insbesondere Ammonium- und Alkaliperoxodisulfate, wie Natrium- und Kaliumperoxodisulfat, oder Alkaliperborate - gegebenenfalls in Anwesenheit katalytischer Mengen an Metallionen, wie Eisen-, Cobalt-, Nickel-, Molybdän- oder Vanadiumionen - sowie Übergangsmetalloxide, wie z.B. Braunstein (Mangan(IV)oxid) oder Cer(IV)oxid.

Für die oxidative Polymerisation der Thiophene der Formel (III) oder (IV) werden theoretisch je Mol Thiophen 2,25 Äquivalente Oxidationsmittel benötigt (siehe z.B. J. Polym. Sc. Part A Polymer Chemistry Vol. 26, S. 1287 (1988)). Es können aber auch niedrigere oder höhere Äquivalente an Oxidationsmittel eingesetzt werden. Im Rahmen der Erfindung wird je Mol Thiophen bevorzugt ein Äquivalent oder mehr, besonders bevorzugt 2 Äquivalente oder mehr Oxidationsmittel eingesetzt.

Die als Feststoffelektrolyt in dem nach dem erfindungsgemäßen Verfahren hergestellten Elektrolytkondensatoren enthaltenen leitfähigen Polymere, bevorzugt Polythiophene können neutral oder kationisch sein. In bevorzugten Ausführungsformen sind sie kationisch, wobei sich "kationisch" nur auf die Ladungen bezieht, die auf der Polymerhauptkette sitzen. Je nach Substituent an den Resten R können die leitfähigen Polymere positive und negative Ladungen in der Struktureinheit tragen, wobei sich die positiven Ladungen auf der Polymerhauptkette und die negativen Ladungen gegebenenfalls an den durch Sulfonat- oder Carboxylatgruppen substituierten Resten R befinden. Dabei können die positiven Ladungen der Polymerhauptkette zum Teil oder vollständig durch die gegebenenfalls vorhandenen anionischen Gruppen an den Resten R abgesättigt werden. Insgesamt betrachtet können die leitfähigen Polymere in diesen Fällen kationisch, neutral oder sogar anionisch sein. Dennoch werden sie im Rahmen der Erfindung alle als

kationische leitfähige Polymere betrachtet, da die positiven Ladungen auf der Polymerhauptkette maßgeblich sind. Die positiven Ladungen sind in den Formeln nicht darstellbar, da ihre genaue Zahl und Position nicht einwandfrei feststellbar sind. Die Anzahl der positiven Ladungen beträgt jedoch mindestens 1 und höchstens n, wobei n die Gesamtanzahl aller wiederkehrenden Einheiten (gleicher oder unterschiedlicher) innerhalb des leitfähigen Polymere, bevorzugt Polythiophens ist.

Zur Kompensation der positiven Ladung, soweit dies nicht bereits durch die gegebenenfalls Sulfonat- oder Carboxylat-substituierten und somit negativ geladenen Reste R erfolgt, benötigen die kationischen leitfähigen Polymere Anionen als Gegenionen.

Den Mischungen, die in den oxidierten Elektrodenkörper eingebracht werden, können daher in einer bevorzugten Ausführung Gegenionen zugesetzt werden. Dies können monomere oder polymere Anionen, letztere im Folgenden als Polyanionen bezeichnet, sein.

Polymere Anionen können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestem und Styrol, sein.

Bevorzugt werden für den Feststoffelektrolyten monomere Anionen eingesetzt, da diese besser in den oxidierten Elektrodenkörper eindringen.

Als monomere Anionen dienen beispielsweise solche von $C_1$-$C_{20}$-Alkansulfonsäuren, wie der Methan-, Ethan-, Propan-, Butan- oder höheren Sulfonsäuren wie der Dodecansulfonsäure, von aliphatischen Perfluorsulfonsäuren, wie der Trifluormethansulfonsäure, der Perfluorbutansulfonsäure oder der Perfluoroctansulfonsäure, von aliphatischen $C_1$-$C_{20}$-Carbonsäuren wie der 2-Ethylhexylcarbonsäure, von aliphatischen Perfluorcarbonsäuren, wie der Trifluoressigsäure oder der Perfluoroctansäure, und von aromatischen, gegebenenfalls durch $C_1$-$C_{20}$-Alkylgruppen substituierten Sulfonsäuren wie der Benzolsulfonsäure, o-Toluolsulfonsäure, p-Toluolsulfonsäure oder der Dodecylbenzolsülfonsäure und von Cycloalkansulfonsäuren wie Camphersulfonsäure oder Tetrafluoroborate, Hexafluorophosphate, Perchlorate, Hexafluoroantimonate, Hexafluoroarsenate oder Hexachloroantimonate. Die monomeren Anionen von Sulfonsäuren sind nicht auf solche von Monosulfonsäuren beschränkt, sondern können auch Anionen von Di-, Tri-oder Polysulfonsäuren sein, beispielsweise von Benzoldisulfonsäure oder Naphthalindisulfonsäure.

Bevorzugt sind die Anionen der p-Toluolsulfonsäure, Methansulfonsäure oder Camphersulfonsäure.

Die Gegenionen werden den Lösungen beispielsweise in Form ihrer Alkalisalze oder als freie Säuren zugegeben.

Außerdem können als Gegenionen die gegebenenfalls vorhandenen Anionen des verwendeten Oxidationsmittels dienen, so dass eine Zugabe zusätzlicher Gegenionen nicht zwingend erforderlich ist.

Kationische Polythiophene, die zur Ladungskompensation Anionen als Gegenionen enthalten, werden in der Fachwelt auch oft als Polythiophen/(Poly-)Anion-Komplexe bezeichnet.

Den Mischungen, die in den oxidierten Elektrodenkörper eingebracht werden, können in Schritt A) außerdem weitere Komponenten wie ein oder mehrere in organischen Lösungsmitteln lösliche organische Binder wie Polyvinylacetat, Polycarbonat, Polyvinylbutyral, Polyacrylsäureester, Polymethacrylsäureester, Polystyrol, Polyacrylnitril, Polyvinylchlorid, Polybutadien, Polyisopren, Polyether, Polyester, Silicone, Styrol/Acrylsäureester-, Vinylacetat/Acrylsäureester- und Ethylen/Vinylacetat-Copolymerisate oder wasserlösliche Binder wie Polyvinylalkohole, Vernetzer wie Melaminverbindungen, verkappte Isocyanate, funktionelle Silane - z.B. Tetraethoxysilan, Alkoxysilanhydrolysate, z.B. auf Basis von Tetraethoxysilan, Epoxysilane wie 3-Glycidoxypropyltrialkoxysilan - Polyurethane, Polyacrylate oder Polyolefindispersionen, und/oder Additive wie z.B. oberflächenaktive Stoffe, z.B. ionische oder nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3 -Metacryloxypropyl-trimethoxysilan, Vinyltrimethoxysilan, Octyltriethoxysilan zugesetzt werden.

Die Aufbringung der Mischung in Schritt A) kann direkt oder unter Verwendung eines Haftvermittlers, beispielsweise eines Silans, wie z.B. organofunktionelle Silane bzw. deren Hydrolysate, z.B. 3-Glycidoxypropyltrialkoxysilan, 3-Aminopropyltriethoxysilan, 3-Mercaptopropyltrimethoxysilan, 3-Metacryloxypropyltrimethoxysilan, Vinyltri-methoxysilan oder Octyltriethoxysilan, und/oder einer oder mehrerer anderer funktioneller Schichten auf das Dielektrikum des Elektrodenkörpers erfolgen.

Die Mischungen enthalten vorzugsweise 1 bis 30 Gew.-% der Vorstufen für die Herstellung leitfähiger Polymere und 0 bis 50 Gew.-% Bindemittel, Vernetzer und/oder Additive, beide Gewichtsprozente bezogen auf das Gesamtgewicht der Mischung.

Besonders bevorzugt bestehen die Mischungen im Wesentlichen aus Vorstufen, Oxidationsmittel und Lösungsmittel.

Als Lösungsmittel für die Vorstufen zur Herstellung leitfähiger Polymere und/oder das Oxidationsmittel und/ oder die Gegenionen seien vor allem folgende unter den Reaktionsbedingungen inerten organischen Lösungsmittel genannt: aliphatische Alkohole wie Methanol, Ethanol, 1-Propanol und Butanol; aliphatische Ketone wie Aceton und

Methylethylketon; aliphatische Carbonsäureester wie Essigsäureethylester und Essigsäurebutylester; aromatische Kohlenwasserstoffe wie Toluol und Xylol; aliphatische Kohlenwasserstoffe wie Hexan, Heptan und Cyclohexan; Chlorkohlenwasserstoffe wie Dichlormethan und Dichlorethan; aliphatische Nitrile wie Acetonitril, aliphatische Sulfoxide und Sulfone wie Dimethylsulfoxid und Sulfolan; aliphatische Carbonsäureamide wie Methylacetamid, Dimethylacetamid und Dimethylformamid; aliphatische und araliphatische Ether wie Diethylether und Anisol. Weiterhin kann auch Wasser oder ein Gemisch aus Wasser mit den vorgenannten organischen Lösungsmitteln als Lösungsmittel verwendet werden.

Die Oxidationsmittel und Vorstufen für die Herstellung leitfähiger Polymere können als Feststoff und/oder Flüssigkeit miteinander gemischt werden. Bevorzugt werden den Mischungen jedoch ein oder mehrere Lösungsmittel zugegeben. Als geeignete Lösungsmittel seien vor allem die oben bereits aufgeführten Lösungsmittel genannt. Besonders bevorzugt als Lösungsmittel sind solche mit einem hohen Dampfdruck wie beispielsweise Methanol oder Ethanol. Solche Lösungsmittel verdampfen schnell ohne Erhitzung aus dem Elektrodenkörper. Dies hat den Vorteil, dass das Lösungsmittel verdampfen kann und sich Vorstufen und Oxidationsmittel auf der inneren Oberfläche des oxidierten Elektrodenkörpers absetzen, bevor die Polymerisation einsetzt. Dadurch werden die Filmeigenschaften, wie Leitfähigkeit und Filmqualität, und die Haftung auf dem Dielektrikum verbessert. Setzt die Polymerisation dagegen bereits in Gegenwart von größeren Mengen Lösungsmittel ein, so kommt es zur Bildung von Polymerpartikeln in Lösung. Diese Partikel haben nach vollständigem Abdampfen des Lösungsmittels eine schlechte Haftung zur Dielektrikumsoberfläche und führen somit zu einem hohen ESR und niedrigen Bedeckungsgraden.

Bevorzugt verdampft man daher aus der Mischung mit Lösungsmittel das Lösungsmittel vor dem Polymerisieren auf der Dielektrikumsoberfläche.

Es ist auch möglich die Mischungen direkt auf der zu beschichtenden Oberfläche herzustellen. Dazu werden Oxidationsmittel und Vorstufen für die Herstellung leitfähiger Polymere nacheinander, bevorzugt in Form von Lösungen auf die zu beschichtende Oberfläche gegeben. Die Mischung entsteht dann durch Durchmischung der einzelnen Komponenten, d.h. Oxidationsmittel und Vorstufen, auf der zu beschichtenden Oberfläche bzw. gegebenenfalls nach teilweisem oder vollständigem Verdampfen der Lösungsmittel durch Diffusion an der Grenzfläche Oxidationsmittel zu Vorstufen.

Die Polymerisationsgeschwindigkeit in Mischungen enthaltend Vorstufen für die Herstellung leitfähiger Polymere und wenigstens ein Oxidationsmittel, wird neben der Konzentration der Edukte durch die Reaktionskonstanten der Polymerisation bestimmt. Die Reaktionskonstanten k besitzen eine Temperaturabhängigkeit, die gegeben ist durch:

$$k = \upsilon * e^{-E\alpha/RT},$$

wobei $\nu$ der Frequenzfaktor, $E_a$ die Aktivierungsenergie in J/mol, R die Gaskonstante 8,3145 $JK^{-1}mol^{-1}$ und T die Temperatur in Kelvin ist.

Die Aktivierungsenergie ist eine temperatur- und konzentrationsunabhängige Kenngröße für die Reaktionsgeschwindigkeit. Eine hohe Aktivierungsenergie führt zu langsameren Reaktionen und damit längeren Topfzeiten der Mischungen. Lange Topfzeiten sind in industriellen Prozessen vorteilhaft, um hohe Materialausbeuten und geringe Prozesskosten zu erzielen.

Bevorzugt sind Mischungen enthaltend Vorstufen für die Herstellung leitfähiger Polymere und wenigstens ein Oxidationsmittel, dadurch gekennzeichnet, dass die Polymerisation der Vorstufen eine Aktivierungsenergie von 75 kJ/mol oder größer, bevorzugt 85 kJ/mol oder größer, besonders bevorzugt 95 kJ/mol oder größer aufweist. Zu hohe Aktivierungsenergien können den Nachteil haben, dass die Polymerisation nur bei sehr hohen Temperaturen einsetzt, die für die Herstellung leitfähiger Polymere nachteilig ist. Daher ist die Aktivierungsenergie bevorzugt kleiner 200 kJ/mol, besonders bevorzugt kleiner 150 kJ/mol und ganz besonders bevorzugt kleiner 130 kJ/mol.

Die Ermittlung von Aktivierungsenergien sowie die Durchführung der kinetischen Messungen hierzu sind dem Fachmann bekannt und beispielsweise in "Kinetics of homogeneous multistep reactions" von F.G. Helfferich, herausgegeben von R.G. Compton und G. Hancock als Volume 38 in der Serie "Comprehensive Chemical Kinetices", (Elsevier, Amsterdam 2001) beschrieben.

Die Mischung kann nach bekannten Verfahren, z.B. durch Tränkung, Gießen, Auftropfen, Spritzen, Aufsprühen, Aufrakeln, Bestreichen, Spincoating oder Bedrucken, beispielsweise Ink-jet-, Sieb-, Kontakt- oder Tampondrukken, auf den oxidierten Elektrodenkörper aufgebracht werden.

Bevorzugt ist ein Eintauchen des oxidierten Elektrodenkörpers in die Mischung. Die Geschwindigkeit des Ein- und Austauchens liegt dabei bevorzugt zwischen 0,001 mm/s und 100 mm/s, besonders bevorzugt zwischen 0,01 mm/s und 10 mm/s.

Erfindungsgemäß wird der getränkte oxidierte Elektrodenkörper einer relativen Luftfeuchte größer oder gleich 70% ausgesetzt. Diese Bedingungen können während des Aufbringens der Mischung und/oder im Anschluss an das Aufbringen vorliegen. Bevorzugt wird der oxidierte Elektrodenkörper erst im Anschluss an das Aufbringen der erhöhten Luftfeuchte ausgesetzt. Dies hat den Vorteil, das die Mischung nicht im erhöhten Maße Wasser aus der Luft aufnimmt

und damit kontinuierlich ihre Zusammensetzung verändert.

Das Aussetzen an erhöhter Luftfeuchte gemäß Schritt B) erfolgt bevorzugt für eine Zeit von 1 s bis 24 h, bevorzugt 30 s bis 2 h, besonders bevorzugt 1 min bis 30 min. Dies kann beispielsweise in einem Klimaschrank erfolgen. Die relative Luftfeuchte ist dabei größer oder gleich 70%, bevorzugt größer oder gleich 80%, besonders bevorzugt größer oder gleich 90%. Die Temperatur während des Aussetzens an erhöhter Luftfeuchte ist bevorzugt kleiner 30°C, besonders bevorzugt ist eine Temperatur zwischen 1 und 30°C, ganz besonders bevorzugt zwischen 10 und 30°C. In bevorzugten Ausführungsformen ist die Temperatur während des Aussetzens an erhöhter Luftfeuchte eine Temperatur von 15 bis 25°C.

Im Anschluss an das Aussetzen an erhöhter Luftfeuchte erfolgt zur weiteren Polymerisation bevorzugt eine thermische Nachbehandlung bei Temperaturen von -10 bis 300°C, bevorzugt 10 bis 200°C, besonders bevorzugt 30 bis 150°C. Die Dauer der Wärmebehandlung beträgt in Abhängigkeit von der Art des für die Beschichtung verwendeten Polymers 5 Sekunden bis mehrere Stunden. Für die thermische Behandlung können auch Temperaturprofile mit unterschiedlicher Temperatur und Verweilzeit eingesetzt werden.

Die Wärmebehandlung kann z.B. in der Weise ausgeführt werden, dass man die beschichteten oxidierten Elektrodenkörper mit einer solchen Geschwindigkeit durch eine auf der gewünschten Temperatur befindliche Wärmekammer bewegt, dass die gewünschte Verweilzeit bei der gewählten Temperatur erreicht wird, oder mit einer auf der gewünschten Temperatur befmdlichen Heizplatte für die gewünschte Verweilzeit in Kontakt bringt. Des Weiteren kann die Wärmebehandlung beispielsweise in einem Wärmeofen oder mehreren Wärmeöfen mit jeweils unterschiedlichen Temperaturen erfolgen.

Nach dem Aussetzen an erhöhter Luftfeuchte und gegebenenfalls nach der thermischen Nachbehandlung kann es vorteilhaft sein, das überschüssige Oxidationsmittel und Restsalze aus der Beschichtung mit einem geeigneten Lösungsmittel, bevorzugt Wasser oder Alkoholen, auszuwaschen. Unter Restsalzen sind hier die Salze der reduzierten Form des Oxidationsmittels und gegebenenfalls weitere vorhandene Salze zu verstehen.

Für metalloxidische Dielektrika, wie beispielsweise die Oxide der Ventilmetalle, kann es nach dem Aussetzen an erhöhter Luftfeuchte und gegebenenfalls einer thermischen Nachbehandlung und bevorzugt während oder nach der Waschung vorteilhaft sein, den Oxidfilm elektrochemisch nachzubilden, um eventuelle Fehlstellen im Oxidfilm auszubessern und dadurch den Reststrom des fertigen Kondensators zu senken. Bei dieser sogenannten Reformierung taucht man den Kondensatorkörper in einen Elektrolyten ein und legt eine Spannung mit positiven Potential an dem Elektrodenkörper. Elektrischer Strom, der vom Elektronenkörper über Defektstellen im Oxidfilm zum leitenden Polymer fließt, bildet die Oxidschicht an dieser Stelle nach bzw. zerstört an diesen Fehlstellen die Leitfähigkeit des leitenden Polymers.

Je nach Art des oxidierten Elektrodenkörpers kann es vorteilhaft sein, den oxidierten Elektrodenkörper vor und/oder nach einem Waschvorgang weitere Male mit den Mischungen aus Vorstufen des leitenden Polymeren und Oxidationsmitteln und gegebenenfalls Gegenionen, zu imprägnieren, um dickere Polymerschichten im Inneren des Elektrodenkörpers zu erzielen. Die Zusammensetzung der Mischungen kann dabei unterschiedlich sein. Der Feststoffelektrolyt kann gegebenenfalls aus einem Vielschichtsystem aufgebaut werden, das mehrere funktionelle Schichten umfasst.

Die Bedeckung der Oberfläche des Dielektrikums durch den Feststoffelektrolyten ist vorzugsweise größer als 50%, besonders bevorzugt größer als 70%, ganz besonders bevorzugt größer als 80%.

Die Bedeckung des Dielektrikums mit dem Feststoffelektrolyten wird im Rahmen dieser Erfmdung folgendermaßen bestimmt: Die Kapazität des Kondensators wird im trockenen und feuchten Zustand bei 120 Hz gemessen. Der Bedeckungsgrad ist das Verhältnis der Kapazität im trockenen Zustand zu der Kapazität im feuchten Zustand ausgedrückt in Prozent. Trockener Zustand bedeutet, dass der Kondensator über mehrere Stunden bei erhöhter Temperatur (80-120°C) getrocknet wurde, bevor er vermessen wird. Feuchter Zustand bedeutet, dass der Kondensator über mehrere Stunden einer gesättigten Luftfeuchte bei erhöhtem Druck, beispielsweise in einem Dampfdruckkessel, ausgesetzt wird. Die Feuchtigkeit dringt dabei in Poren ein, die vom Feststoffelektrolyten nicht bedeckt sind, und wirkt dort als Flüssigelektrolyt.

Überraschend wurde gefunden, dass das oben beschriebene erfmdungsgemäße Verfahren dazu führt, dass die Polymerisation auf der äußeren Oberfläche des oxidierten Elektrodenkörpers unterdrückt wird. Dadurch ist es nunmehr möglich, das Innere des Elektrodenkörpers mit einem leitfähigen Polymer hinreichend zu beschichten, ohne dass selbst bei mehrfacher Tränkung und Polymerisation gleichzeitig ein schlecht haftender Außenfilm entsteht. Nach der inneren Beschichtung gemäß Schritt A) und B) kann somit die Lösung oder Dispersion enthaltend wenigstens ein leitfähiges Polymer und einen Binder direkt auf die äußere Oberfläche des oxidierten Elektrodenkörpers aufgebracht werden. Der direkte Kontakt des Binders zur äußeren Oberfläche führt zu einer guten Haftung des polymeren Außenfilms auf dem oxidierten Elektrodenkörper.

Nach Herstellung des Feststoffelektrolyten und gegebenenfalls nach Aufbringen weiterer Schichten z.B. anderer leitfähiger Schichten auf den Kondensatorkörper wird daher auf dem Kondensatorkörper zur Herstellung einer polymeren Außenschicht erfindungsgemäß eine Lösung oder Dispersion enthaltend wenigstens ein leitfähiges Polymer

und einen Binder aufgebracht.

Die leitfähigen Polymere in der Lösung oder Dispersion lassen sich aus den oben beschriebenen Vorstufen für die Herstellung des Feststoffelektrolyten herstellen. Vorangehend aufgeführte Vorzugsbereiche, Definitionen und Beispiele für Vorstufen gelten analog in beliebiger Kombination für die leitfähigen Polymere in der Lösung oder Dispersion.

Bevorzugte leitfähige Polymere in der Lösung oder Dispersion sind gegebenenfalls substituierte Polythiophene, Pyrrole und/oder Aniline.

Besonders bevorzugt als leitfähiges Polymer in der Lösung oder Dispersion ist ein gegebenenfalls substituiertes Polythiophen mit wiederkehrenden Einheiten der allgemeinen Formel (V) oder (VI) oder wiederkehrenden Einheiten der allgemeinen Formeln (V) und (VI),

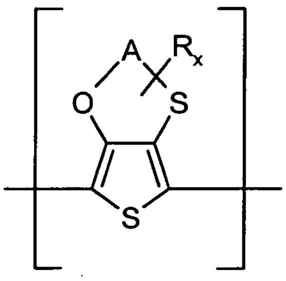

(V)

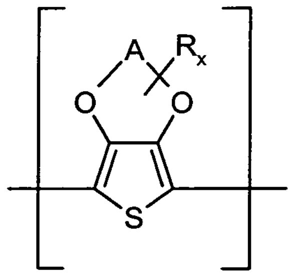

(VI)

worin

A für einen gegebenenfalls substituierten $C_1$-$C_5$-Alkylenrest steht,

R für einen linearen oder verzweigten, gegebenenfalls substituierten $C_1$-$C_{18}$-Alkylrest, einen gegebenenfalls substituierten $C_5$-$C_{12}$-Cycloalkylrest, einen gegebenenfalls substituierten $C_6$-$C_{14}$-Arylrest, einen gegebenenfalls substituierten $C_7$-$C_{18}$-Aralkylrest, einen gegebenenfalls substituierten $C_1$-$C_4$-Hydroxyalkylrest oder einen Hydroxylrest steht,

x für eine ganze Zahl von 0 bis 8 steht und

für den Fall, dass mehrere Reste R an A gebunden sind, diese gleich oder unterschiedlich sein können,

Die allgemeinen Formeln (V) und (VI) sind so zu verstehen, dass x Substituenten R an den Alkylenrest A gebunden sein können.

Ganz besonders bevorzugt als leitfähiges Polymer in der Lösung oder Dispersion ist Poly-3,4-Ethylendioxythiophen.

Für die Polythiophene mit wiederkehrenden Einheiten der allgemeinen Formel (V) oder (VI) oder wiederkehrenden Einheiten der allgemeinen Formel (V) und (VI), die sich in der polymeren Außenschicht befinden, gelten die vorangehend im Zusammenhang mit den Vorstufen aufgeführten Definitionen für bevorzugte Reste A, R und für x. Vorzugsbereiche gelten in beliebiger Kombination analog.

Unter dem Präfix Poly- ist im Rahmen der Erfindung zu verstehen, dass mehr als eine gleiche oder verschiedene wiederkehrende Einheit im Polymeren bzw. Polythiophen enthalten ist. Die Polythiophene enthalten insgesamt n wiederkehrende Einheiten der allgemeinen Formel (V) oder (VI) oder der allgemeinen Formeln (V) und (VI), wobei n eine ganze Zahl von 2 bis 2000, bevorzugt 2 bis 100, ist. Die wiederkehrenden Einheiten der allgemeinen Formel (V) und/oder (VI) können innerhalb eines Polythiophens jeweils gleich oder verschieden sein. Bevorzugt sind Polythiophene mit jeweils gleichen wiederkehrenden Einheiten der allgemeinen Formel(n) (V), (VI) oder (V) und (VI).

An den Endgruppen tragen die Polythiophene bevorzugt jeweils H.

Als Gegenion für die leitfähigen Polymere im Schritt C) können bevorzugt monomere und/oder polymere Anionen fungieren. Als Gegenionen kommen die vorangehend bereits für die Mischungen genannten in Frage. Vorzugsbereiche gelten in beliebiger Kombination analog.

Bevorzugt dient ein polymeres Anion als Gegenion. Polymere Anionen können beispielsweise Anionen polymerer Carbonsäuren, wie Polyacrylsäuren, Polymethacrylsäure oder Polymaleinsäuren, oder polymerer Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestem und Styrol, sein.

Bevorzugt ist als polymeres Anion ein Anion einer polymeren Carbon- oder Sulfonsäure.

Besonders bevorzugt als polymeres Anion ist das Anion der Polystyrolsulfonsäure (PSS).

Das Molekulargewicht der die Polyanionen liefernden Polysäuren beträgt vorzugsweise 1000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Polymere(s) Anion(en) und leitfähige Polymere können in der Lösung oder Dispersion in einem Gewichtsverhältnis von 0,5:1 bis 50:1, bevorzugt von 1:1 bis 30:1, besonders bevorzugt 2:1 bis 20:1 enthalten sein, jeweils bezogen auf das Gewicht nach Trocknen der Lösung oder Dispersion. Das Gewicht der leitfähigen Polymere entspricht hierbei der Einwaage der eingesetzten Monomere unter Annahme, dass bei der Polymerisation vollständiger Umsatz erfolgt.

Die Lösungen und Dispersionen im Schritt C) enthalten außerdem insbesondere mindestens ein Lösungsmittel. Als Lösungsmittel kommen die vorangehend bereits für die Vorstufen genannten Lösungsmittel in Frage. Bevorzugte Lösungsmittel sind Wasser oder andere protische Lösungsmittel wie Alkohole, z.B. Methanol, Ethanol, i-Propanol und Butanol, sowie Mischungen von Wasser mit diesen Alkoholen, besonders bevorzugtes Lösungsmittel ist Wasser.

Vorzugsweise enthält die Lösung oder Dispersion zur Herstellung der polymeren Außenschicht wenigstens einen polymeren, organischen Binder. Als polymere, organische Binder kommen beispielsweise Polyvinylalkohole, Polyvinylpyrrolidone, Polyvinylchloride, Polyvinylacetate, Polyvinylbutyrate, Polyacrylsäureester, Polyacrylsäureamide, Polymethacrylsäureester, Polymethacrylsäureamide, Polyacrylnitrile, Styrol/Acrylsäureester-, Vinylacetat/Acrylsäureester- und Ethylen/Vinylacetat-Copolymerisate, Polybutadiene, Polyisoprene, Polystyrole, Polyether, Polyester, Polycarbonate, Polyurethane, Polyamide, Polyimide, Polysulfone, Melamin-Formaldehyharze, Epoxidharze, Siliconharze oder Cellulosen in Frage. Weiterhin kommen im Rahmen der Erfmdung als polymere organische Binder auch solche in Frage, die durch Zugabe von Vemetzem wie beispielsweise Melaminverbindungen, verkappten Isocyanaten oder funktionellen Silanen, wie z.B. 3-Glycidoxypropyltrialkoxysilan, Tetraethoxysilan und Tetraethoxysilanhydrolysat, oder vernetzbaren Polymeren wie z.B. Polyurethanen, Polyacrylaten oder Polyolefmen und anschließende Vernetzung erzeugt werden. Solche als polymere Binder geeigneten Vemetzungsprodukte können auch beispielsweise durch Reaktion der zugegebenen Vernetzer mit zugegebenen polymeren Anionen gebildet werden. Dabei übernimmt das vernetzte Polyanion in der polymeren Außenschicht dann sowohl die Funktion eines polymeren Anion als auch die des Binders. Kondensatoren enthaltend solche vemetzten Polyanionen sind auch als Kondensatoren im Rahmen dieser Erfindung zu verstehen. Bevorzugt sind solche Binder, die eine ausreichende Temperaturstabilität aufweisen, um den Temperaturbelastungen zu widerstehen, denen die fertigen Kondensatoren später ausgesetzt werden, z.B. Löttemperaturen von 220 bis 260°C.

Der Anteil des polymerem Binders in der Lösung oder Dispersion beträgt bezogen auf die Zusammensetzung nach dem Trocknen der Lösung oder Dispersion 1 - 90 %, bevorzugt 5 - 80% und ganz besonders bevorzugt 20 - 60%.

Der Zusatz von Bindern hat den großen Vorteil, dass die Adhäsion der äußeren Polymerschicht an den Kondensatorkörper erhöht wird. Darüber hinaus erhöht der Binder den Feststoffanteil in der Dispersion, so dass bereits mit einer Tränkung eine hinreichende Außenschichtdicke erzielt werden kann und die Kantenbelegung deutlich verbessert wird.

Die Lösung oder Dispersion enthaltend wenigstens ein leitfähiges Polymer und einen Binder gemäß Schritt C) kann außerdem weitere Komponenten enthalten wie oberflächenaktive Substanzen, z.B. ionische und nichtionische Tenside oder Haftvermittler, wie z.B. organofunktionelle Silane bzw. deren Hydrolysate, z.B. 3-Glycidoxypropyltrialkoxysilan, 3-Aminopropyltriethoxysilan, 3-Mercaptopropyl-trimethoxysilan, 3-Metacryloxypropyltrimethoxysilan, Vinyltrimethoxysilan oder Octyltriethoxysilan.

Bevorzugt enthalten die Lösungen und Dispersionen gemäß Schritt C) weitere Additive, die die Leitfähigkeit steigern, wie z.B. ethergruppenhaltige Verbindungen, wie z.B. Tetrahydofuran, lactongruppenhaltige Verbindungen wie γ-Butyrolacton, γ-Valerolacton, amid- oder lactamgruppenhaltige Verbindungen wie Caprolactam, N-Methylcaprolactam, N,N-Dimethylacetamid, N-Methylacetamid, N,N-Dimethylformamid (DMF), N-Methylformamid, N-Methylformanilid, N-Methylpyrrolidon (NMP), N-Octylpyrrolidon, Pyrrolidon, Sulfone und Sulfoxide, wie z.B. Sulfolan (Tetramethylensulfon), Dimethylsulfoxid (DMSO), Zucker oder Zuckerderivate, wie z.B. Saccharose, Glucose, Fructose, Lactose, Zuckeralkohole wie z.B. Sorbit, Mannit, Furanderivate, wie z.B. 2- Furancarbonsäure, 3-Furancarbonsäure, und/oder Di- oder Polyalkohole, wie z.B. Ethylenglycol, Glycerin, Di- bzw. Triethylenglycol. Besonders bevorzugt werden als leitfähigkeitserhöhende Additive Tetrahydrofuran, N-Methylformamid, N-Methylpyrrolidon, Dimethylsulfoxid oder Sorbit eingesetzt.

Die Herstellung der Lösungen oder Dispersionen erfolgt aus z.B. aus Mischungen enthaltend Vorstufen und

Oxidationsmittel. Die Herstellung von Dispersionen aus gegebenenfalls substituierten Anilinen, Thiophenen der allgemeinen Formel (I), (II) oder Mischungen aus Thiophenen der allgemeinen Formeln (I) und (II) erfolgt beispielsweise analog zu den in EP-A 440 957 genannten Bedingungen. Als Oxidationsmittel, Lösungsmittel und monomere oder polymere Anionen kommen die vorangehend bereits aufgeführten in Frage.

Auch eine Herstellung eines Polyanilin/Polyanion oder Polythiophen/Polyanion-Komplexes und anschließende Dispergierung oder Redispergierung in einem oder mehreren Lösungsmittel(n) ist möglich.

Die Lösungen oder Dispersionen werden nach bekannten Verfahren, z.B. durch Spincoating, Tränkung, Gießen, Auftropfen, Spritzen, Aufsprühen, Aufrakeln, Bestreichen oder Bedrucken, beispielsweise Ink-jet-, Sieb- oder Tampondrucken auf den Kondensatorkörper aufgebracht.

Bevorzugt werden Lösungen oder Dispersionen enthaltend wenigstens ein leitfähiges Polymer und einen Binder eingesetzt, die im getrockneten Zustand eine spezifische Leitfähigkeit von größer 10 S/cm, besonders bevorzugt größer 20 S/cm, ganz besonders bevorzugt größer 50 S/cm und überaus bevorzugt größer 100 S/cm aufweisen.

Auch an die Aufbringung der polymeren Außenschicht können sich Trocknung, Reinigung der Schicht durch Waschen, Reformierung und mehrmaliges Aufbringen - wie vorangehend bereits für die Herstellung des Feststoffelektrolyten beschrieben - anschließen. Je nach verwendetem Binder oder Vernetzer können auch weitere Behandlungsschritte wie z.B. Aushärtung oder Vernetzung durch Temperatur oder Licht angewendet werden. Ferner können weitere Schichten auf die polymere Außenschicht aufgebracht werden.

Die Dicke der polymeren Außenschicht beträgt 1-1000 μm, bevorzugt 1-100 μm, besonders bevorzugt 2-50 μm, ganz besonders bevorzugt 4-20 μm. Die Schichtdicke kann auf der äußeren Oberfläche variieren. Insbesondere kann die Schichtdicke an den Kanten des Kondensatorkörpers dicker oder dünner als auf den Seitenflächen des Kondensatorkörpers sein. Bevorzugt wird eine nahezu homogene Schichtdicke.

Die polymere Außenschicht kann bezüglich ihrer Zusammensetzung hinsichtlich der Binder, leitfähigen Polymere und polymeren Anionen eine homogene oder inhomogene Verteilung aufweisen. Bevorzugt werden homogene Verteilungen.

Die polymere Außenschicht kann Bestandteil eines Vielschichtsystems aus mehreren funktionellen Schichten sein, das die Außenschicht des Kondensatorkörpers bildet. Es können sich auch weitere funktionelle Schichten auf der polymeren Außenschicht befinden. Ferner können sich mehrere polymere Außenschichten auf dem Kondensatorkörper befinden.

Bevorzugt befindet sich die polymere Außenschicht ohne weitere Zwischenschichten direkt auf der äußeren Oberfläche des Kondensatorkörpers. Die polymere Außenschicht dringt bevorzugt in den Randbereich des Kondensatorkörpers ein, um einen guten elektrischen Kontakt zu dem Feststoffelektrolyten zu erzielen und die Haftung zum Kondensatorkörper zu erhöhen (vgl. beispielhaft Fig.2).

In einer besonders bevorzugten Ausführungsform enthält der erfindungsgemäße Elektrolytkondensator eine Feststoffelektrolyten enthaltend Poly(3,4-ethylendioxythiophen) (PEDT) und eine polymere Außenschicht enthaltend Polystyrolsulfonsäure (PSS) und Poly(3,4-ethylendioxythiophen), letzteres wird in der Literatur häufig auch als PEDT/PSS oder PEDOT/PSS bezeichnet.

In einer ganz besonders bevorzugten Ausführungsform enthält der erfindungsgemäße Elektrolytkondensator eine Feststoffelektrolyten aus Poly(3,4-ethylendioxythiophen) und monomeren Gegenionen und eine polymere Außenschicht aus PEDT/PSS und einem Binder.

Weiterer Gegenstand der Erfindung ist ein Verfahren zur Herstellung von Elektrolytkondensatoren, dadurch gekennzeichnet, dass es sich bei dem Elektrodenmaterial um ein Ventilmetall oder eine Verbindung mit einem Ventilmetall vergleichbaren elektrischen Eigenschaften handelt.

Als Ventilmetall sind im Rahmen der Erfmdung solche Metalle zu verstehen, deren Oxidschichten den Stromfluss nicht in beide Richtungen gleichermaßen ermöglichen: Bei anodisch angelegter Spannung sperren die Oxidschichten der Ventilmetalle den Stromfluss, während es bei kathodisch angelegter Spannung zu großen Strömen kommt, die die Oxidschicht zerstören können. Zu den Ventilmetallen zählen Be, Mg, Al, Ge, Si, Sn, Sb, Bi, Ti, Zr, Hf, V, Nb, Ta und W sowie eine Legierung oder Verbindung von wenigstens einem dieser Metalle mit anderen Elementen. Die bekanntesten Vertretern der Ventilmetalle sind Al, Ta, und Nb. Verbindungen mit vergleichbaren Eigenschaften sind solche mit metallischer Leitfähigkeit, welche oxidierbar sind und deren Oxidschichten die vorangehend beschriebenen Eigenschaften besitzen. Beispielsweise besitzt NbO metallische Leitfähigkeit, wird jedoch im allgemeinen nicht als Ventilmetall betrachtet. Schichten von oxidiertem NbO weisen jedoch die typischen Eigenschaften von Ventilmetalloxidschichten auf, so dass NbO oder eine Legierung oder Verbindung von NbO mit anderen Elementen typische Beispiele für solche Verbindungen mit vergleichbaren Eigenschaften sind.

Demzufolge sind unter dem Begriff "oxidierbares Metall" nicht nur Metalle, sondern auch eine Legierung oder Verbindung eines Metalls mit anderen Elementen umfasst, sofern sie metallische Leitfähigkeit besitzen und oxidierbar sind.

Besonders bevorzugt Gegenstand der vorliegenden Erfindung ist demgemäß ein Verfahren zur Herstellung von Elektrolytkondensatoren, dadurch gekennzeichnet, dass es sich bei dem Ventilmetall oder der Verbindung mit

vergleichbaren Eigenschaften um Tantal, Niob, Aluminium, Titan, Zirkonium, Hafnium, Vanadium, eine Legierung oder Verbindung von wenigstens einem dieser Metalle mit anderen Elementen, NbO oder eine Legierung oder Verbindung von NbO mit anderen Elementen handelt.

Das Dielektrikum besteht bevorzugt aus einem Oxid des Elektrodenmaterials oder - sofern es sich bei diesem bereits um ein Oxid handelt - einer höher oxidierten Form des Elektrodenmaterials. Es enthält gegebenenfalls weitere Elemente und/oder Verbindungen.

Die oxidierbaren Metalle werden beispielsweise in Pulverform zu einem porösen Elektrodenkörper gesintert oder es wird einem metallischen Körper eine poröse Struktur aufgeprägt. Letzteres kann z.B. durch Ätzen einer Folie erfolgen.

Die porösen Elektrodenkörper werden beispielsweise in einem geeigneten Elektrolyten, wie z.B. Phosphorsäure, durch Anlegen einer Spannung oxidiert. Die Höhe dieser Formierspannung ist abhängig von der zu erzielenden Oxidschichtdicke bzw. der späteren Anwendungsspannung des Kondensators. Bevorzugte Spannungen sind 1 bis 300 V, besonders bevorzugt 1 bis 80V.

Bevorzugt werden zur Herstellung des Elektrodenkörpers Metallpulver mit einer spezifischen Ladung größer als 35000 µC/g, besonders bevorzugt mit einer spezifischen Ladung größer 45000 µC/g, ganz besonders bevorzugt mit einer spezifischen Ladung größer 65000 µC/g, überaus bevorzugt mit einer spezifischen Ladung größer 95000 µC/g verwendet. In bevorzugten Ausführungsformen des erfindungsgemäßen Verfahrens werden Metallpulver mit einer spezifischen Ladung größer 140000 µC/g eingesetzt.

Die spezifische Ladung der Metallpulver berechnet sich dabei wie folgt:

Spezifische Ladung = (Kapazität * Spannung)/ Gewicht des oxidierten Elektrodenkörpers.

Die Kapazität ergibt sich dabei aus der Kapazität des oxidierten Elektrodenkörpers gemessen bei 120 Hz in einem wässrigen Elektrolyten. Die elektrische Leitfähigkeit des Elektrolyten ist dabei hinreichend groß, so dass es bei 120 Hz noch nicht zu einem Kapäzitätsabfall aufgrund des elektrischen Widerstands des Elektrolyten kommt. Beispielsweise werden 18%ige wässrige Schwefelsäure-Elektrolyte zur Messung eingesetzt. Die Spannung in obiger Formel entspricht der maximalen Formierspannung (Oxidationsspannung).

Die nach dem erfindungsgemäßen Verfahren hergestellten Elektrolytkondensatoren eignen sich aufgrund ihres niedrigen Reststroms und ihres niedrigen ESR hervorragend als Bauteil in elektronischen Schaltungen. Bevorzugt sind digitale elektronische Schaltungen, wie sie sich beispielsweise in Computern (Desktop, Laptop, Server), in tragbaren elektronischen Geräten, wie z.B. Mobiltelefone und Digitalkameras, in Geräten der Unterhaltungselektronik, wie z.B. in CD/DVD Spielern und Computerspielkonsolen, in Navigationssystemen und in Telekommunikationseinrichtungen befinden.

Weiterhin Gegenstand der vorliegenden Erfmdung sind daher Elektrolytkondensatoren hergestellt mit dem erfindungsgemäßen Verfahren, sowie die Verwendung dieser Elektrolytkondensatoren in elektronischen Schaltungen.

Bevorzugt sind Elektrolytkondensatoren, die eine spezifische Ladung größer als 5000 µC/g, besonders bevorzugt größer 15000 µC/g, ganz besonders bevorzugt größer 30000 µC/g, überaus bevorzugt größer 40000 µC/g bezogen auf das Gewicht des mit einem Dielektrikum überzogenen Elektrodenkörpers besitzen.

Die spezifische Ladung der Elektrolytkondensatoren berechnet sich dabei wie folgt:

Spezifische Ladung = (Kapazität * Spannung)/ Gewicht des oxidierten Elektrodenkörpers.

Die Kapazität ergibt sich dabei aus der Kapazität des Elektrolytkondensators gemessen bei 120 Hz und die Spannung ist die Arbeitsspannung des Kondensators (rated voltage). Das Gewicht des oxidierten Elektrodenkörpers bezieht sich auf das reine Gewicht des mit Dielektrikum überzogenen porösen Elektrodenmaterials ohne Polymer, Kontakte und Verkapselungen.

Bevorzugt sind Elektrolytkondensatoren, die einen ESR gemessen bei 100 kHz von kleiner 51 mΩ aufweisen. Besonders bevorzugt ist der ESR der erfindungsgemäßen Elektrolytkondensatoren, der bei einer Frequenz von 100 kHz gemessen wird, kleiner 31 mΩ, ganz besonders bevorzugt kleiner 21 mΩ, überaus bevorzugt kleiner 16 mΩ. In besonders bevorzugten Ausführungsformen der erfindungsgemäßen Elektrolytkondensatoren ist der ESR kleiner 11 mΩ.

Der äquivalente Serienwiderstand eines Feststoffelektrolytkondensators korreliert invers mit der geometrischen Oberfläche des Kondensators. Das Produkt aus dem äquivalenten Serienwiderstand und der geometrischen Oberfläche gibt demnach eine von der Baugröße unabhängige Größe an.

Unter geometrischer Oberfläche wird im Folgenden die Außenfläche des Kondensatorkörpers verstanden, die sich aus den geometrischen Abmessungen ergibt. Für quaderförmige Sinterkörper beträgt die geometrische Oberfläche demnach:

geometrische Oberfläche = 2(L*B+L*H+B*H),

wobei L die Länge, B die Breite und H die Höhe des Körpers ist und * als Multiplikationszeichen steht. Dabei wird nur der Teil des Kondensatorkörpers betrachtet, auf dem sich die polymere Außenschicht befindet.

Werden mehrere Kondensatorkörper in einem Kondensator verwendet, so addieren sich die einzelnen geometrischen Oberflächen zur einer gesamten geometrischen Oberfläche.

Für Feststoffelektrolytkondensatoren, die beispielsweise eine gewickelte Folie als porösen Elektrodenkörper enthalten, werden als Maße die Abmessungen der entwickelten Folie (Länge, Breite) verwendet.

Ebenfalls bevorzugt sind daher Elektrolytkondensatoren, bei denen das Produkt aus dem äquivalenten Serienwiderstand gemessen bei 100 kHz und der geometrischen Oberfläche des Kondensatorkörpers kleiner 4000 $m\Omega mm^2$ ist. Besonders bevorzugt ist das Produkt aus dem äquivalenten Serienwiderstand und der geometrischen Oberfläche kleiner 3000 $m\Omega mm^2$, ganz besonders bevorzugt kleiner 2000 $m\Omega mm^2$, überaus bevorzugt kleiner 1000 $m\Omega mm^2$. In besonders bevorzugten Ausführungsformen der erfindungsgemäßen Elektrolytkondensatoren ist das Produkt aus dem äquivalenten Serienwiderstand und der geometrischen Oberfläche kleiner 600 $m\Omega mm^2$.

Die im Folgenden aufgeführten Beispiele sind nicht als Beschränkung aufzufassen.

## Beispiele

### Beispiel 1

1. Herstellung von oxidierten Elektrodenkörpern

Tantalpulver mit einer spezifischen Kapazität von 50 000 µFV/g wurde zu Pellets gepresst und gesintert, um einen porösen Elektrodenkörper mit den Abmessungen 4,2 mm * 3 mm * 1.6 mm zu bilden. Die Pellets (Anodenpellets) wurden in einem Phosphorsäureelektrolyten auf 30 V anodisiert.

2. Erfindungsgemäße chemische in-situ Beschichtung der Anodenpellets

Es wurde eine Lösung, bestehend aus einem Gewichtsteil 3,4-Ethylendioxythiophen (BAYTRON® M, H.C. Starck GmbH) und 20 Gewichtsteilen einer 40 Gew.-%igen ethanolischen Lösung von Eisen(III)-p-toluolsulfonat (BAYTRON® C-E, H.C. Starck GmbH) hergestellt.

Die Lösung wurde zur Imprägnierung der Anodenpellets verwendet. Die Anodenpellets wurden in dieser Lösung getränkt und anschließend für 30 min bei Raumtemperatur (20°C) einer relativen Luftfeuchte von 95% ausgesetzt. Danach wurden sie 15 min bei 50°C und 15 min bei 150°C in einem Trockenschrank wärmebehandelt. Anschließend wurden die Pellets in einer wässrigen 2%igen Lösung von p-Toluolsulfonsäure 30 min lang gewaschen. Die Anodenpellet wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurden noch vier weitere Male durchgeführt.

### Vergleichsbeispiel 1

Es wurden beschichtete Anodenpellets analog zu Beispiel 1 hergestellt, mit dem Unterschied, dass diese nach der Tränkung für 30 min bei Raumtemperatur (20°C) einer relativen Luftfeuchte von lediglich 50% ausgesetzt wurden.

Die Anodenpellets aus Beispiel 1 besaßen keinen sichtbaren äußeren Polymerfilm. Auf den Anodenpellets aus dem Vergleichsbeispiel 1 hatte sich hingegen ein deutlich sichtbarer äußerer Polymerfilm gebildet, der Risse und Abplatzungen aufwies.

Beispiel 1 zeigt, dass das erfindungsgemäße Aussetzen der mit Vorstufen und Oxidationsmittel getränkten Anodenpellets an erhöhter Luftfeuchte dazu führt, dass die Polymerisation auf der äußeren Anodenoberfläche unterdrückt wird, auch wenn im Anschluss eine Temperaturbehandlung bei erhöhter Temperatur erfolgt. Dahingegen bildet sich im Vergleichsbeispiel ein äußerer Polymerfilm, der eine schlechte Haftung zur Anodenoberfläche besitzt.

**Beispiel 2**

Herstellung von erfindungsgemäßen Kondensatoren

1. Herstellung von oxidierten Elektrodenkörpern

Tantalpulver mit einer spezifischen Kapazität von 50 000 µFV/g wurde zu Pellets gepresst und gesintert, um einen porösen Elektrodenkörper mit den Abmessungen 4,2 mm * 3 mm * 1.6 mm zu bilden. Die Pellets (Anodenpellets) wurden in einem Phosphorsäureelektrolyten auf 30 V anodisiert.

2. Chemische in-situ Beschichtung der Anodenpellets

Es wurde eine Lösung, bestehend aus einem Gewichtsteil 3,4-Ethylendioxythiophen (BAYTRON® M, H.C. Starck GmbH) und 20 Gewichtsteilen einer 40 Gew.%igen ethanolischen Lösung von Eisen(III)-p-toluolsulfonat (BAYTRON® C-E, H.C. Starck GmbH) hergestellt.

Die Lösung wurde zur Imprägnierung von 7 Anodenpellets verwendet. Die Anodenpellets wurden in dieser Lösung getränkt und anschließend für 30 min bei Raumtemperatur (20°C) einer relativen Luftfeuchte von 95% ausgesetzt. Danach wurden sie 15 min bei 50°C und 15 min bei 150°C in einem Trockenschrank wärmebehandelt. Anschließend wurden die Pellets in einer wässrigen 2%igen Lösung von p-Toluolsulfonsäure 30 min lang gewaschen. Die Anodenpellet wurden 30 min in einer 0,25 Gew.-% wässrigen Lösung von p-Toluolsulfonsäure reformiert, anschließend in destilliertem Wasser gespült und getrocknet. Die beschriebene Tränkung, Trocknung, Temperaturbehandlung und Reformierung wurden noch zwei weitere Male durchgeführt.

3. Aufbringen einer polymeren Außenschicht

Die Anodenpellets wurden anschließend in einer wässrigen Dispersion, bestehend aus 90 Teilen einer wässrigen PEDT/PSS Dispersion (BAYTRON® P, H.C. Starck GmbH), 4 Teilen DMSO, 4,2 Teilen eines sulfonierten Polyesters (Eastek® 1400, Feststoffgehalt. 30 Gew.-% in Wasser, Eastman) und 0,2 Teilen Tensid (Zonyl® FS 300, Du Pont) getränkt und 15 mm bei 80°C getrocknet.

Abschließend wurden die Pellets mit einer Graphit und Silberschicht überzogen.

**Vergleichsbeispiel 2**

Es wurden 7 Kondensatoren analog zu Beispiel 2 gefertigt, mit dem Unterschied, dass diese nach der Tränkung für 30 mm bei Raumtemperatur (20°C) einer relativen Luftfeuchte von lediglich 50% ausgesetzt wurden.

Die Kondensatoren hatten im Mittel folgende elektrischen Werte:

| | Beispiel 2 95% relative Luftfeuchte | Vergleichsbeispiel 2 50% relative Luftfeuchte |
|---|---|---|
| Kapazität 120 Hz | 137 µF | 126 µF |
| Kapazität 100 kHz | 107 µF | 68 µF |
| ESR bei 10 kHz | 28 mΩ | 50 mΩ |
| ESR bei 100 kHz | 23 mΩ | 28 mΩ |

Die Kapazität wurde bei 120 Hz und 100 kHz und der äquivalente Serienwiderstand (ESR) bei 10 kHz und bei 100 kHz mittels eines LCR Meters (Agilent 4284A) bestimmt.

Die erfindungsgemäß hergestellten Kondensatoren aus Beispiel 2, die einer relativen Luftfeuchte von 95% ausgesetzt wurden, zeigen deutlich bessere elektrische Eigenschaften als die Kondensatoren aus Vergleichsbeispiel 2, die einer relativen Luftfeuchte von 50% ausgesetzt wurden:

Die erfindungsgemäß hergestellten Kondensatoren besitzen einen im Frequenzintervall von 10 kHz bis 100 kHz stabilen ESR. Der ESR bei 10 kHz liegt nur um 5 mΩ höher als bei 100 kHz. Daraus resultiert, dass selbst bei hohen Frequenzen von 100 kHz noch fast 80% der Kapazität zur Verfügung stehen. Dagegen zeigen die Kondensatoren aus dem Vergleichsbeispiel einen starken ESR Anstieg hin zu kleineren Frequenzen. Der ESR Wert bei 10 kHz liegt um 22 mΩ höher als bei 100 kHz. Dadurch bricht die Kapazität dieser Kondensatoren bei 100 kHz nahezu auf die Hälfte ihres Werts bei 120 Hz ein. Die Ursache dieses schlechten Frequenzverhaltens der Vergleichskondensatoren liegt in der mangelnden Adhäsion der äußeren Polymerschicht an den Kondensatorkörper. Die gute Adhäsion des

Binders zum Kondensatorkörper kommt nicht zur Geltung, da sich zwischen der Kondensatorkörper und der binderhaltigen Polymerschicht noch eine in-situ polymerisierte Schicht befmdet, die keine gute Haftung zum Kondensatorkörper aufweist.

**Beispiel 3.1**

Herstellung von erfindungsgemäßen Kondensatoren

Es wurden 7 Kondensatoren analog zu Beispiel 2 gefertigt, mit dem Unterschied, dass die Anodenpellets nach der Tränkung und nach 15-minütigem Aussetzen einer relativen Luftfeuchte von 95% bei 20°C dann für 30 min bei 50°C wärmebehandelt wurden.

**Beispiel 3.2**

Es wurden 7 Kondensatoren analog zu Beispiel 3.1 gefertigt, mit dem Unterschied, dass die Anodenpellets nach der Tränkung für 15 min einer relativen Luftfeuchte von 95% bei 40°C ausgesetzt wurden.
Die Kondensatoren hatten im Mittel folgende elektrischen Werte:

| | Beispiel 3.1 95% relative Luftfeuchte, 20°C | Beispiel 3.2 95% relative Luftfeuchte, 40°C |
|---|---|---|
| Kapazität 120 Hz | 119 µF | 74 µF |
| Kapazität 100 kHz | 89 µF | 47 µF |
| ESR bei 10 kHz | 30 mΩ | 54 mΩ |
| ESR bei 100 kHz | 22 mΩ | 30 mΩ |

Die Kapazität wurde bei 120 Hz und 100 kHz und der äquivalente Serienwiderstand (ESR) bei 10 kHz und bei 100 kHz mittels eines LCR Meters (Agilent 4284A) bestimmt.
Die erfindungsgemäß hergestellten Kondensatoren aus Beispiel 3.1, die einer relativen Luftfeuchte von 95% bei 20°C ausgesetzt wurden, zeigen deutlich eine höhere Kapazität und einen niedrigeren ESR sowohl bei 10 kHz als auch bei 100 kHz. Die Kondensatoren aus Beispiel 3.1 zeigen damit noch bessere elektrische Eigenschaften als die Kondensatoren aus Beispiel 3.2, die einer relativen Luftfeuchte von 95% bei 40°C ausgesetzt wurden.
Niedrigere Temperaturen, bevorzugt kleiner 30°C beim Aussetzen an erhöhter Luftfeuchte, wie in Beispiel 3.1, führen zu einem niedrigeren ESR und einer höheren Kapazität.

**Beispiel 4**

Herstellung von erfindungsgemäßen Kondensatoren

Es wurden 6 Kondensatoren analog zu Beispiel 2 gefertigt.

**Vergleichsbeispiel** 4

Es wurden 6 Kondensatoren analog zu Beispiel 2 gefertigt, jedoch ohne Aufbringen einer polymeren Außenschicht.
Die Kondensatoren aus Beispiel 4 hatten im Mittel einen Reststrom von 0.9 µA bei 10 V Arbeitsspannung. Die Kondensatoren aus dem Vergleichsbeispiel 4 ohne polymere Außenschicht waren bei 10 V alle kurzgeschlossen.
Beispiel 4 und Vergleichsbeispiel 4 zeigen, dass das im erfindungsgemäßen Verfahren das Aufbringen einer polymeren Außenschicht erforderlich ist, um Kondensatoren mit niedrigen Restströmen herzustellen.

**Patentansprüche**

1. Verfahren zur Herstellung eines Elektrolytkondensators wenigstens enthaltend folgende Prozessschritte A) bis C), wobei

   A) zur Bildung eines Feststoffelektrolyten eine Mischung enthaltend Vorstufen zur Herstellung leitfähiger Polymere, ein oder mehrere Oxidationsmittel und gegebenenfalls Gegenionen in einen mit einem Dielektrikum und gegebenenfalls weiteren Schichten überzogenen porösen Elektrodenkörper eines Elektrodenmaterials eingebracht wird,

B) der mit der Mischung enthaltend Vorstufen zur Herstellung leitfähiger Polymere, ein oder mehrere Oxidationsmittel und gegebenenfalls Gegenionen getränkte Elektrodenkörpers einer relativen Luftfeuchte größer oder gleich 70% ausgesetzt wird, die Vorstufen polymerisiert werden, und

C) zur Bildung einer leitfähigen Außenschicht auf den mit einem Dielektrikum sowie ganz oder teilweise mit einem Feststoffelektrolyten und gegebenenfalls weiteren Schichten bedeckten porösen Elektrodenkörper eine Lösung oder Dispersion enthaltend mindestens ein leitfähiges Polymer und mindestens einen Binder aufgebracht wird und getrocknet wird.

**2.** Verfahren gemäß Anspruch 1, **dadurch gekennzeichnet, dass** B) bei einer Temperatur kleiner 30°C erfolgt.

**3.** Verfahren gemäß Anspruch 1 oder 2, **dadurch gekennzeichnet, dass** als Vorstufen zur Herstellung leitfähiger Polymere gegebenenfalls substituierte Thiophene, Pyrrole oder Aniline eingesetzt werden.

**4.** Verfahren gemäß Anspruch 3, **dadurch gekennzeichnet, dass** als gegebenenfalls substituiertes Thiophen 3,4-Ethylendioxythiophen eingesetzt wird.

**5.** Verfahren gemäß wenigstens einem der Ansprüche 1 bis 4, **dadurch gekennzeichnet, dass** als Oxidationsmittel Alkali- oder Ammoniumperoxodisulfate, Wasserstoffperoxid, Alkaliperborate, Eisen-III-salze organischer Säuren, Eisen-III-salze anorganischer Säuren oder Eisen-III-salze anorganischer Säuren, welche organische Reste aufweisen, verwendet werden.

**6.** Verfahren gemäß wenigstens einem der Ansprüche 1 bis 5, **dadurch gekennzeichnet, dass** es sich bei den Gegenionen um Anionen von monomeren Alkan- oder Cycloalkansulfonsäuren oder aromatischen Sulfonsäuren handelt.

**7.** Verfahren gemäß wenigstens einem der Ansprüche 1 bis 6, **dadurch gekennzeichnet, dass** die in A) eingesetzte Mischung eine Aktivierungsenergie von 75 kJ/mol oder größer für die Polymerisation aufweist.

**8.** Verfahren gemäß wenigstens einem der Ansprüche 1 bis 7 **dadurch gekennzeichnet, dass** die in C) aufgebrachte Lösung oder Dispersion als leitfähiges Polymer gegebenenfalls substituierte Polythiophene, Polypyrrole und/oder Polyaniline enthält.

**9.** Verfahren gemäß Anspruch 8 **dadurch gekennzeichnet, dass** es sich bei dem gegebenenfalls substituierten Polythiophen um Poly(3,4-ethylendioxythiophen) handelt.

**10.** Verfahren gemäß wenigstens einem der Ansprüche 1 bis 9, **dadurch gekennzeichnet, dass** es sich bei dem Elektrodenmaterial um ein Ventilmetall oder eine Verbindung mit vergleichbaren Eigenschaften handelt.

**11.** Verfahren gemäß Anspruch 10, **dadurch gekennzeichnet, dass** es sich bei dem Ventilmetall oder der Verbindung mit vergleichbaren Eigenschaften um Tantal, Niob, Aluminium, Titan, Zirkon, Hafnium, Vanadium, eine Legierung oder Verbindung von wenigstens einem dieser Metalle mit anderen Elementen, NbO oder eine Legierung oder Verbindung von NbO mit anderen Elementen handelt.

**12.** Verfahren gemäß wenigstens einem der Ansprüche 1 bis 11, **dadurch gekennzeichnet, dass** es sich bei dem Dielektrikum um ein Oxid des Ventilmetalls oder ein Oxid der Verbindung mit vergleichbaren elektrischen Eigenschaften handelt.

**13.** Verfahren gemäß wenigstens einem der Ansprüche 1 bis 12, **dadurch gekennzeichnet, dass** die Mischung nach Schritt A) zusätzlich Lösungsmittel enthält, das aus der Mischung auf dem Elektrodenkörper vor dem Polymerisieren verdampft wird.

**14.** Elektrolytkondensatoren hergestellt mit einem Verfahren gemäß wenigstens einem der Ansprüche 1 bis 13.

**15.** Elektrolytkondensator gemäß Anspruch 14, **dadurch gekennzeichnet, dass** der Elektrolytkondensator eine spezifische Ladung größer als 5000 µC/g besitzt bezogen auf das Gewicht des mit einem Dielektrikum überzogenen Elektrodenkörpers.

**16.** Verwendung von Elektrolytkondensatoren gemäß Anspruch 15 oder 16 in elektronischen Schaltungen.

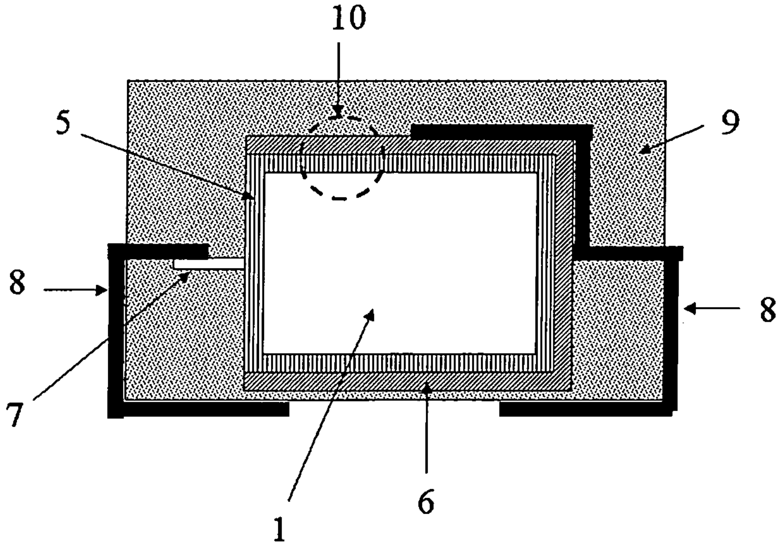


Fig. 1

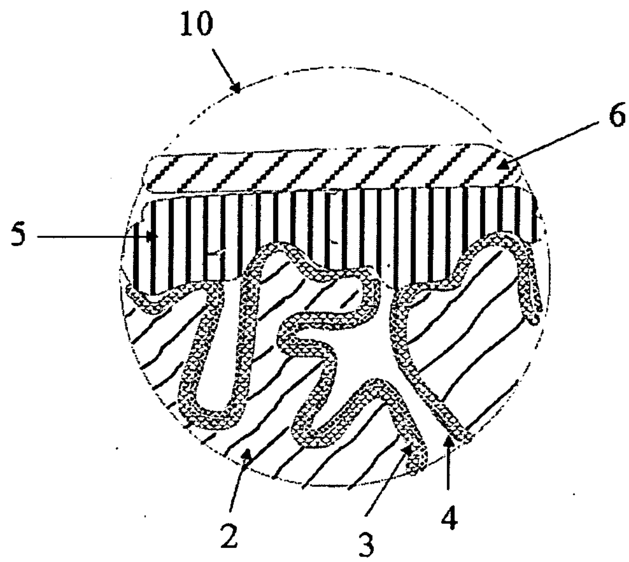


Fig. 2

Europäisches Patentamt

# EUROPÄISCHER RECHERCHENBERICHT

Nummer der Anmeldung
EP 05 00 9304

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 674 635 B1 (FIFE JAMES A ET AL) 6. Januar 2004 (2004-01-06) | 1 | H01G9/028 |
| X | * Beispiel 6 * | 1-4,14, 16 | |
| X | * Spalten 7,8, Zeilen 7-67 * | 5,8,9 | |
| X | * Spalten 3,4, Zeilen 1-67; Anspruch 7 * | 10-12 | |
| X | * Spalte 7, Zeilen 13-18 * | 13 | |
| X | * Tabellen I-XIII * | 15 | |
| A | * das ganze Dokument * ----- | 6,7 | |
| X | US 2002/015279 A1 (SAKAI ATSUSHI ET AL) 7. Februar 2002 (2002-02-07) | 1 | |
| X | * Absätze [0082], [0088], [0089], [0100], [0108], [0109], [0115], [0120]; Ansprüche 9,12,21 * | 1-6,8-16 | |
| A | * das ganze Dokument * ----- | 7 | |
| A | US 2003/148023 A1 (SAKAI ATSUSHI ET AL) 7. August 2003 (2003-08-07) * das ganze Dokument * ----- | 1-16 | |

RECHERCHIERTE SACHGEBIETE (Int.Cl.7)

H01G
C08G
C01G
B05D

Der vorliegende Recherchenbericht wurde für alle Patentansprüche erstellt

| Recherchenort | Abschlußdatum der Recherche | Prüfer |
|---|---|---|
| München | 29. August 2005 | Dessaux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2
EPO FORM 1503 03.82 (P04C03)

## ANHANG ZUM EUROPÄISCHEN RECHERCHENBERICHT ÜBER DIE EUROPÄISCHE PATENTANMELDUNG NR. EP 05 00 9304

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2005

| Im Recherchenbericht angeführtes Patentdokument | Datum der Veröffentlichung | Mitglied(er) der Patentfamilie | Datum der Veröffentlichung |
|---|---|---|---|
| US 6674635 B1 | 06-01-2004 | US 6864147 B1 | 08-03-2005 |
| US 2002015279 A1 | 07-02-2002 | US 2002191367 A1 | 19-12-2002 |
| US 2003148023 A1 | 07-08-2003 | US 6517892 B1 | 11-02-2003 |
| | | US 2004136145 A1 | 15-07-2004 |
| | | AU 3669800 A | 23-10-2000 |
| | | EP 1190426 A1 | 27-03-2002 |
| | | WO 0060620 A1 | 12-10-2000 |
| | | JP 2002541659 T | 03-12-2002 |
| | | TW 502266 B | 11-09-2002 |

EPO FORM P0461

Für nähere Einzelheiten zu diesem Anhang : siehe Amtsblatt des Europäischen Patentamts, Nr.12/82